# EUROPÄISCHE PATENTANMELDUNG

(11) **EP 0 855 852 A2**
(43) Veröffentlichungstag der Anmeldung: **29.07.1998**
(21) Anmeldenummer: 98101042.4
(22) Anmeldetag: 22.01.1998
(51) Int. Cl.: H05B 41/29, H05B 41/392

(54) **Anordnung zur Leistungsanpassung einer Gasentladungslampe**

(30) Priorität: 25.01.1997 DE 19702653
(71) Anmelder: ROBERT BOSCH GMBH, 70442 Stuttgart (DE)
(72) Erfinder: Kern, Robert, 77830 Buehlertal (DE)

(57) **Zusammenfassung**

Eine Anordnung zur Leistungsanpassung einer Gasentladungslampe, enthält ein Steuergerät mit DC/DC-Wandler. Die Gasentladungslampe liegt im Diagonalzweig einer H-Brücke. Bei Leistungsminderung wird eine Periodenveränderung der der Gasentladungslampe zugeführten Spannung bzw. Strom vorgenommen. Gemäß der Erfindung wird die H-Brücke im leistungsreduzierten Betrieb mit Hochfrequenz betrieben. Vorzugsweise stimmt diese mit der Serienresonanzfrequenz der aus Zünder und Gasentladungslampe gebildeten Einheit überein. Die Umschaltung der Frequenz wird bei Eintritt von Minderleistung softwaremäßig gesteuert.

## Beschreibung

### Stand der Technik

Die Erfindung geht aus von einer Anordnung zur Leistungsanpassung einer Gasentladungslampe gemäß der im Oberbegriff des Anspruchs 1 definierten Gattung.

Bei einer bekannten Anordnung dieser Art zur Anpassung der Leistung einer Gasentladungslampe, wie sie in der DE 44 39 812 beschrieben ist, ist ein Steuergerät zur Energieversorgung der Gasentladungslampe vorgesehen. Das Steuergerät enthält einen DC/DC-Wandler, der eine Gleichspannung in eine andere Gleichspannung wandelt sowie eine Brückenschaltung, insbesondere eine H-Brücke, in deren Diagonalzweig die Gasentladungslampe liegt. Durch die Brückenschaltung wird die Gasentladungslampe mit Wechselspannung bzw. Wechselstrom versorgt. Bei einer Reduzierung der mittleren Lampenleistung gegenüber dem Nennbetrieb ist eine Verlängerung der Periodendauer der Lampenwechselspannung oder des Lampenwechselstroms vorgesehen. Dadurch wird die Niederfrequenz, mit der die Lampe betrieben wird noch weiter abgesenkt.

Neben dieser bekannten Verlängerung der Periodendauer zur Verbesserung des Umpolvorganges bei Minderleistung, ist es auch bekannt, den Brennbetrieb bei Minderleistung mit Niederfrequenz-Rechteckspannung zu betreiben. Bekannt ist auch eine Erhöhung der Lampenleistung direkt vor dem Umpolen zur Verbesserung des Umpolvorganges bei Minderleistung.

### Vorteile der Erfindung

Die erfindungsgemäße Anordnung mit den kennzeichnenden Merkmalen des Anspruchs 1 bzw. das erfindungsgemäße Verfahren mit den kennzeichnenden Merkmalen des grundlegenden Verfahrensanspruchs, hat demgegenüber den entscheidenden Vorteil, daß die Leistung einer Gasentladungslampe soweit reduziert werden kann, daß der Lampenbetrieb auch bei noch geringeren Eingangsspannungen möglich ist. Weiterhin wird dafür Sorge getragen, daß das Steuergerät wirksam vor Übertemperaturen im leistungsgeminderten Betrieb geschützt wird.

Gemäß der Erfindung ist prinzipiell bei der Anordnung zur der Leistungsanpassung einer Gasentladungslampe vorgesehen, die H-Brücke im leistungsreduzierten Betrieb mit Hochfrequenz HF zu betreiben.

Diese erfindungsgemäße Lösung geht einen zum Stand der Technik konträren Weg, nämlich die Leistungsminderung bei erhöhter Betriebsfrequenz durchzuführen. Die Brennspannung wird also mit sehr hoher Frequenz umgepolt. Dies führt dazu, daß die Lampenleistung wesentlich weiter heruntergedimmt werden kann, als dies bei Niederfrequenz der Fall ist. Die dabei auftretende Signalform an der Lampe ist sinusförmig.

Durch diese Betriebsweise verringert sich zwar der Wirkungsgrad der H-Brücke. Jedoch kann die Lampe mit sehr stark reduzierter Brennleistung betrieben werden, so daß die Gesamtverlustleistung des Steuergerätes geringer wird und noch unterhalb wärmemäßig schädlicher Werte liegt.

Durch die in den weiteren Anordnungsansprüchen niedergelegten Maßnahmen sind vorteilhafte Weiterbildungen und Verbesserungen der im Anspruch 1 angegebenen Anordnung zur Leistungsanpassung der Gasentladungslampe möglich.

Gemäß einer besonders vorteilhaften Ausgestaltung der erfindungsgemäßen Anordnung ist die Hochfrequenz derart gewählt, daß sie mit der Serienresonanzfrequenz der aus Zünder und Gasentladungslampe gebildeten Einheit übereinstimmt.

Entsprechend einer besonders vorteilhaften Ausgestaltung der Erfindung ist sie zur Minderung der Verlustleistung des Steuergerätes bei Betrieb der Gasentladungslampe bei Brennbetrieb unter Normalleistung verwendet.

In weiterer zweckmäßiger Ausgestaltung der erfindungsgemäßen Anordnung findet sie Verwendung in Kraftfahrzeugen zum Betrieb von Gasentladungslampen, insbesondere Hochdruck-Gasentladungslampen.

Das erfindungsgemäße Verfahren ist dadurch gekennzeichnet, daß eine Änderung der Betriebsfrequenz der die Gasentladungslampe speisenden H-Brücke dahingehend vorgenommen wird, daß bei Brennbetrieb unterhalb der Normalleistung die Speisung mit Hochfrequenz erfolgt.

Vorteilhafte Weiterbildungen und Verbesserungen des erfindungsgemäßen Verfahrens sind in den zugehörigen abhängigen Verfahrensansprüchen niedergelegt. So beinhaltet eine vorteilhafte Ausführung des Verfahrens, daß als Hochfrequenz vorzugsweise diejenige Frequenz gewählt wird, welche der Serienresonanzfrequenz der aus Zünder und Gasentladungslampe gebildeten Einheit entspricht.

Gemäß einer besonders vorteilhaften und Kosten sparenden Ausgestaltung des erfindungsgemäßen Verfahrens wird die Umschaltung der Frequenz bei Eintritt von Minderleistung softwaremäßig gesteuert.

### Beschreibung des Ausführungsbeispiels

Vorliegender Erfindung liegt die Erkenntnis zugrunde, daß eine Gasentladungslampe im Hochfrequenzbetrieb weiter heruntergedimmt werden kann, als dies im Niederfrequenzbereich der Fall ist. Im Brennbetrieb mit Normalleistung werden die Vorteile des niederfrequenten Rechteckbetriebs, d.h. die der Lampe zugeführte Spannung bzw. der Strom hat Rechteckform, genutzt. Dadurch kann der dabei entstehende gute Wirkungsgrad ausgenutzt werden. Im Brennbetrieb mit Minderleistung kann der weniger gute Wirkungsgrad in Kauf genommen werden, wenn die im Steuergerät entstehende Verlustleistung insgesamt niedriger wird als im Normalbetrieb. Es entsteht dann kein Übertemperaturproblem.

Die mit Wechselstrom betriebene Gasentladungslampe wird von einem Steuergerät energiemäßig versorgt. Das Steuergerät enthält einen DC/DC-Wandler, der aus einer Eingangsgleichspannung, die insbesondere von einer Kraftfahrzeugbatterie geliefert werden kann, eine andere Gleichspannung erzeugt. Diese Gleichspannung wird dann von der H-Brücke zerhackt in eine Wechselspannung. Im Diagonalzweig dieser Brücke liegt die Gasentladungslampe, die mit dieser Wechselspannung bzw. dem von der H-Brücke erzeugten Wechselstrom versorgt wird. Im Normalbetrieb wird dabei die H-Brücke mit der Niederfrequenz von typischerweise 400 Hz betrieben, wobei die Wellenform rechteckig ist. Die Gasentladungslampe wird also mit einer NF-Recheckspannung betrieben.

Entsprechend der Erfindung wird die H-Brücke dann mit Hochfrequenz betrieben, wenn die Gasentladungslampe im leistungsreduzierten Betrieb gefahren wird. Geht also die Leistung, insbesondere die von der Batterie gelieferte Eingangsleistung zurück, dann wird von der Steuerung her die H-Brücke auf Hochfrequenz umgeschaltet und die Gasentladungslampe mit hochfrequenter Wechselspannung bzw. - strom versorgt. Die Frequenz wird vorteilhafterweise so gewählt, daß sie mit der Serienresonanzfrequenz der von Zünder und Lampe gebildeten Einheit entspricht. Diese Frequenz wird durch den Aufbau und die eingesetzten Bauelemente des Zünders bestimmt. Typischerweise besteht ein Zünder aus einer seriengeschalteten Zünderinduktivität und einer Zünderausgangskapazität. Zur Zünderausgangskapazität schaltet sich die Lampenkapazität parallel.

Betreibt man die Gasentladungslampe, insbesondere eine Hochdruck-Gasentladungslampe, wie sie zunehmend in modernen Kraftfahrzeugscheinwerferlampen Verwendung findet, in dieser erfindungsgemäßen Weise im leistunsgeminderten Bereich, dann hat dies die nachfolgenden Auswirkungen:
a) die Brennspannung der Gasentladungslampe wird mit sehr hoher Frequenz, beispielsweise 20 kHz, umgepolt. Dies hat zur Folge, daß die Lampenleistung wesentlich weiter als mit Niederfrequenz herunterdimmbar ist;
b) die Signalform von Strom und Spannung an der Gasentladungslampe ist sinusförmig;
c) bedingt durch a) und b) ergibt sich ein geringerer Wirkungsgrad der H-Brücke.
Allerdings, und dies wandelt sich letztlich in einen erheblichen Vorteil, ist dadurch die Möglichkeit geschaffen, die Gasentladungslampe mit einer sehr stark reduzierten Brennleistung zu betreiben. Dadurch werden auch die Gesamtverluste im Steuergerät geringer und eine Überhitzung wird vermieden.

Die erfindungsgemäße Steuerungsart der H-Brücke läßt sich ohne zusätzlichen Aufwand von Bauelementen rein softwaremäßig realisieren, was Mehrkosten vermeidet.

Durch die Erfindung kann eine Gasentladungslampe bei noch niedrigeren Eingangsspannungen betrieben werden, als dies bislang der Fall war. Durch die erfindungsgemäß erreichte Verminderung der Verlustleistung des Steuergerätes wird dieses vor Übertemperatur geschützt. Der Betrieb einer Gasentladungslampe ist sicherer, auch unter erschwerten und extremen Bedingungen. Dies ist insbesondere bei in Kraftfahrzeugscheinwerfern verwendeten Lampen von ganz entscheidender Bedeutung.

## Patentansprüche

1. Anordnung zur Leistungsanpassung einer Gasentladungslampe, welche ein Steuergerät mit DC/DC-Wandler enthält und wobei die Gasentladungslampe im Diagonalzweig einer H-Brücke liegt und bei Leistungsminderung eine Periodenveränderung der der Gasentladungslampe zugeführten Spannung bzw. Strom vorgenommen wird,
dadurch gekennzeichnet, daß
die H-Brücke im leistungsreduzierten Betrieb mit Hochfrequenz betrieben wird.

2. Anordnung nach Anspruch 1, dadurch gekennzeichnet, daß die Hochfrequenz derart gewählt ist, daß sie mit der Serienresonanzfrequenz der aus Zünder und Gasentladungslampe gebildeten Einheit übereinstimmt.

3. Anordnung nach einem der vorigen Ansprüche, dadurch gekennzeichnet, daß sie zur Minderung der Verlustleistung des Steuergerätes bei Betrieb der Gasentladungslampe bei Brennbetrieb unter Normalleistung verwendet ist.

4. Anordnung nach einem der vorigen Ansprüche, gekennzeichnet durch die Verwendung in Kraftfahrzeugen zum Betrieb von Gasentladungslampen, insbesondere Hochdruck-Gasentladungslampen.

5. Verfahren zum Betrieb einer Gasentladungslampe im leistungsmäßig geminderten Betrieb, insbesondere bei einer Anordnung nach einem der Ansprüche 1 bis 4, dadurch gekennzeichnet, daß eine Änderung der Betriebsfrequenz der die Gasentladungslampe speisenden H-Brücke dahingehend vorgenommen wird, daß bei Brennbetrieb unterhalb der Normalleistung die Speisung mit Hochfrequenz erfolgt.

6. Verfahren nach Anspruch 5, dadurch gekennzeichnet, daß als Hochfrequenz vorzugsweise diejenige Frequenz gewählt wird, welche der Serienresonanzfrequenz der aus Zünder und Gasentladungslampe gebildeten Einheit entspricht.

7. Verfahren nach einem der Ansprüche 5 oder 6, dadurch gekennzeichnet, daß die Umschaltung der Frequenz bei Eintritt von Minderleistung softwaremäßig gesteuert wird.
